# EUROPEAN PATENT APPLICATION

(11) **EP 4 691 918 A1**
(43) Date of publication of application: **11.02.2026**
(21) Application number: 25194667.9
(22) Date of filing: 07.08.2025
(51) Int. Cl.: B64D 39/00

(54) **AUTONOMOUS AERIAL REFUELING RECEIVER (A2R2) MISSION STATE MANAGEMENT**

(30) Priority: 09.08.2024 US 202463681657 P; 21.07.2025 US 202519275225
(71) Applicant: The Boeing Company, Arlington, VA 22202 (US)
(72) Inventor: CARINI, Christian L., Arlington, 22202 (US); LAHR, Jason A., Arlington, 22202 (US); MCCLINTOCK, Ryan P., Arlington, 22202 (US); PRICE, Caleb G., Arlington, 22202 (US); NESBETH, Rame T., Arlington, 22202 (US)
(74) Representative: Boult Wade Tennant LLP

(57) **Abstract**

A method for managing an aerial fueling between an aircraft receiving fuel and a tanker delivering fuel. The method includes receiving, by the receiving aircraft, a fueling instruction, collecting, by the receiving aircraft based on the fueling instruction, vision data, providing, by the receiving aircraft, navigation data to the tanker, detecting, by the receiving aircraft using the vision data and relative to the tanker, a drogue associated with the tanker, determining, based on the vision data and the navigation data relative to the tanker, a track of the drogue and a distance between the drogue and the receiving aircraft, and engaging, based on the vision data and the navigation data relative to the drogue, the drogue and the receiving aircraft when distance is within a pre-selected range.

## Description

### FIELD OF THE DISCLOSURE

The present disclosure is directed to aerial fueling, and specifically aerial fueling without user intervention.

### BACKGROUND

Aircraft aerial fueling, or fueling in the air, is the process of transferring fuel from one aircraft (the tanker) to another aircraft (the receiver). One purpose of air-to-air fueling is to allow airplanes to fight more effectively by increasing their range, the amount of weapons and ammunition they can carry, and the time they can spend in the air. Another purpose is to allow air power to be used farther from home and concentrated where and when it is needed most. Military aircraft have used aerial fueling for almost one hundred years. The first aerial fueling was accomplished in 1921 by manually transferring a container of fuel from a Lincoln Standard biplane to a Curtis Jenny airplane.

There are two different types of air-to-air fueling systems in use: probe-and-drogue and the flyable boom. In the aerial boom system, used primarily by the Air Force, the receiving plane flies in close formation to the tanker. A boom operator in the tanker then flies a rigid boom into a receptacle on the top of the aircraft. The probe and drogue system, used by Navy, Marine, and Army aircraft, uses a flexible hose with a basket on the end, called a drogue. The receiving aircraft has a rigid probe that plugs into the basket. These two systems are not compatible, although some booms can be adapted (on the ground only) using a boom drogue adapter to be compatible with probe-equipped receivers. Some tankers are equipped with both boom and probe-and-drogue systems and may use either on the same flight.

The probe and drogue system pumps 1,500 to 2,000 pounds (220 to 290 gallons) per minute (680 to 910 kilograms (830 to 1,100 litres) per minute). A single aircraft can carry multiple drogues, allowing more than one aircraft to fuel at a time. The probe and drogue system is used for fueling fighters and helicopters. NATO has used both systems for decades and both are generally, but not universally and formally, standardized. In order to formalize equipment standardization within NATO, specifications and Standardization Agreements ("STANAGs") have been developed. The systems are operated by an aerial fueling operator in a tanker aircraft. The operator controls the connection of the boom or probe-and-drogue to the receiver aircraft. Much of the system is automated, and the transfer of fuel is very rapid.

Modern aircraft carry a lot of fuel. A typical pickup truck carries 30 gallons (110 litres) of gasoline. An F-16 carries 880 gallons (3,300 litres) of fuel, or the equivalent of about 30 pickup trucks of fuel. An Air Force F-22 carries 2,600 gallons (9,800 litres) of fuel. In order to fuel these aircraft, modern tanker aircraft carry even more: a KC-135 carries 22,000 gallons (83,000 litres) of fuel, and the KC-46 carries 31,000 gallons (120,000 litres), or about as much as three large tanker trucks. Modern tanker aircraft are the KC-135, KC-10 and KC-46. Most military aircraft are designed to receive fuel through a special port connected to its fuel tanks. Both small and large receiver aircraft utilize fueling. Boom systems deliver to all types of military aircraft, for example. Probe-and-drogue systems deliver fuel to small receivers.

Aerial fueling operations require extensive training and are one of the most difficult flight maneuvers for a pilot. The tanker and receiver are approximately 35 feet (11 metres) apart during boom fueling and about 80 feet (24 metres) apart in probe and drogue fueling. The airflow around the tanker and the receiver aircraft is complex and makes maneuvering of the aircraft a challenge. In addition to the basic challenge of flying the aircraft, the boom has control surfaces (i.e. small wings) and is maneuvered by the boom operator during the process of connecting to the receiver aircraft. Some fueling operations are at night or in rough weather, making the maneuvers more difficult. The boom operator has night vision cameras to help with nighttime fueling. The tanker has special marking and lights to assist with fueling as well.

Aircraft autopilots and boom-automated controls, as well as cameras and lighting systems, have improved aerial fueling operations. The tankers used by the United States Air Force utilize modified commercial airplanes and add military systems. Large fuel tanks are added in the fuselage of the aircraft to carry the fuel to be transferred to the receiver aircraft. The other key systems to transfer fuel from the tanker are booms with control surfaces. The boom is approximately 35 feet (11 metres) long and is on the bottom of the fuselage of the tanker. The boom is deployed by lowering its aerodynamic control surface and may be extended about 35 feet (11 metres). This means the receiver aircraft must fly an approach to the tanker that puts it within 35 feet (11 metres). The boom operator maneuvers the boom to make contact with the receptacle on the receiver. The relative positions of the two aircraft must be maintained during the fuel operation within the maneuver envelope of the boom. If a problem occurs the boom will automatically disconnect from the receiver. The flow field around the aircraft is very complicated and contains flow gradients that the receiver and tanker must overcome with their control surfaces.

Another system that the United States Navy receiver relies on is the probe-and-drogue system. The KC-46 tanker has three of these systems which deploy a drogue attached to a hose: two in pods on the wing and one on the lower fuselage centerline. A long hose with a nozzle at the end, about 80 feet (24 metres), is wound on a spool inside of a wing pod or a spool in the fuselage. A small drogue is an aerodynamic device that is attached to the end of the hose to control its path and maintain stability when the hose and nozzle are deployed. The receiver has a probe that mates up to the hose nozzle and then fuel is transferred. Both boom and drogue systems must operate over a range of flight speeds and altitudes called the fueling envelope. Each receiver type has a small speed range and altitude at which it is best to fuel. Thus, the tanker aircraft must slow down or speed up to match the receiver's ideal fueling speed. The maximum altitude of the receiver may also force the tanker to fly at lower altitude. The weight and speed of the tanker and receiver also influence the "angle of attack" of each aircraft. The result of speed, altitude, and weight creates large variation in the flow field around the tanker aircraft. To design a fueling system for a tanker and the many receiver aircraft types requires a large investment in wind tunnel testing, flight testing, computational modeling, and simulation. Thus, tanker aircraft designs are very complicated.

DARPA, by way of its Autonomous High-Altitude Refueling program, demonstrated for the first time the ability to safely conduct fully autonomous aerial fueling of unmanned air vehicles (UAVs) in challenging high-altitude flight conditions. During the program's final test flight, two modified RQ-4 Global Hawk aircraft flew in close formation-100 feet (30 metres) or less between fueling probe and receiver drogue-for the majority of a 2.5-hour engagement at 44,800 feet (13,700 metres). The successful test helped pave the way for future unmanned high-altitude long-endurance aircraft that can fuel in flight, expanding their mission capabilities and range. This is a highly specialized system that autonomously manages the transition logic associated with the naval aerial fueling CONOPS.

What is needed are a system and method that increase the probability of a successful drogue basket engagement.

### SUMMARY

Systems and methods in accordance with examples of the present disclosure solve the problems of (a) filtering and monitoring a high-quality vision-based drogue basket track, and (b) transitioning between different navigation modes without user intervention, thus increasing the probability of a successful drogue basket engagement. Given a drogue basket, a vision-based detection source, a solution filtering mechanism, an inertial source, and a guidance processor, a system and method in accordance with examples of the present disclosure manage aerial fueling mission phase of flight by (a) establishing a stable drogue basket track, (b) confirming quality of inertial and vision inputs, and (c) moving between aerial fueling mission modes. The system and method, for example, (a) use a state estimation filter to combine a plurality of data sources, for example, but not limited to, longwave infrared (LWIR) vision drogue basket detection with inertial data, (b) monitor system health and change to a nominal fueling state without user intervention based on, for example, sensor time-outs, (c) estimate drogue basket track quality, and (d) transition between fueling states without user intervention. In some configurations, an internal state machine in a guidance controller enables the transition from one guidance state to another without user intervention. The guidance controller includes navigation guidance mode logic

The system and method are not limited to solving the air-to-air fueling problem, but could be applied to other vision-based navigation methods. The system and method enable aerial fuel and receive capability that occurs without user intervention, and allow for swapping of different system sub-components. In some configurations, the vision-related features can be augmented by machine learning.

In some configurations, the drogue basket track can be refined by filtering a vision-based basket track using one or more of a Kalman filter, a particle filter, or a convolutional neural network (CNN)-based filter, which can decrease the probability of a collision between the receiver and the basket or tanker, increase the certainty of correct drogue basket identification, and increase the probability of a successful drogue engagement as compared to a vision or inertial approach alone.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. Some examples include a method for managing an aerial fueling between an aircraft receiving fuel and a tanker delivering fuel. The method includes receiving, by the receiving aircraft, a fueling instruction, collecting, without user intervention, by the receiving aircraft based on the fueling instruction, vision data, providing, without user intervention, by the receiving aircraft, navigation data to the tanker, detecting, without user intervention, by the receiving aircraft using the vision data and relative to the tanker, a drogue associated with the tanker, determining, without user intervention, based on the vision data and the navigation data relative to the tanker, a track of the drogue and a distance between the drogue and the receiving aircraft, and engaging, without user intervention, based on the vision data and the navigation data relative to the drogue, the drogue and the receiving aircraft when distance is within a pre-selected range. Other examples include corresponding computer systems, apparatus, and computer programs recorded on one or more computer storage devices, each configured to perform the actions of the methods.

Examples may include one or more of the following features. The method may include establishing a drogue track that is stable, confirming a quality of the navigation data and the vision data; and moving between aerial fueling mission states, without user intervention. The aerial fueling mission states may include a vision state machine searching state for searching, using vision data collected by the receiving aircraft, for the drogue associated with the tanker, a filter state machine filter nominal state for processing the vision data and determining when the vision data are stable, a vision state machine tracking state for determining the track of the drogue based on the vision data determined to be stable, a guidance state machine tanker relative control state for navigating the receiving aircraft based on the tanker, and/or a guidance state machine drogue relative control state for navigating the receiving aircraft based on the drogue. Triggering a transition between the guidance state machine tanker relative control state and the guidance state machine drogue relative control state further may include determining that a drogue state estimate convergence is below a first pre-selected threshold for a pre-selected amount of time, and/or determining that a drogue range estimate is below a second pre-selected threshold for the pre-selected amount of time. Triggering a transition between the guidance state machine drogue relative control state and the guidance state machine tanker relative control state further may include determining that communications for receiving the navigation data has timed out, determining that communications for receiving the vision data has timed out, determining that a vision track reset has occurred, determining that a filter has coasted for longer than a pre-selected threshold, and/or determining that a probe associated with the receiving aircraft and the drogue associated with the tanker have engaged. Implementations of the described techniques may include hardware, a method or process, or computer software on a computer-accessible medium.

Some examples include a method for managing transition logic, without user intervention, associated with aerial fueling between an aircraft receiving fuel and a tanker delivering the fuel. The method includes triggering a transition between a vision state machine idle state and a vision state machine searching state based on a filter state machine filter initialization state, where the vision state machine searching state includes searching, using vision data collected by the receiving aircraft, for a drogue associated with the tanker. The method includes triggering a transition between the filter state machine filter initialization state and a filter state machine filter nominal state, and a transition between the filter state machine filter nominal state and the filter state machine filter initialization state, based on a lack of a vision reset, where the filter state machine filter nominal state includes processing the vision data and determining when the vision data are stable, and triggering a transition between the vision state machine searching state and the vision state machine tracking state, a transition between a guidance state machine tanker relative control state and a guidance state machine drogue relative control state, a transition between the vision state machine tracking state and the vision state machine searching state, a transition between the guidance state machine drogue relative control state and the guidance state machine tanker relative control state, based on the filter state machine filter nominal state. The method also includes where the vision state machine tracking state includes determining a track of the drogue based on the vision data. The method also includes where the guidance state machine tanker relative control state includes navigating the receiving aircraft based on vision data and navigation data associated with the tanker. The guidance state machine drogue relative control state includes navigating the receiving aircraft based on vision data and navigation data associated with the drogue. Other examples include corresponding computer systems, apparatus, and computer programs recorded on one or more computer storage devices, each configured to perform the actions of the methods.

Examples may include one or more of the following features. The method where triggering a transition between the guidance state machine tanker relative control state and the guidance state machine drogue relative control state further may include determining that a drogue state estimate convergence is below a first pre-selected threshold for a pre-selected amount of time, and/or determining that a drogue range estimate is below a second pre-selected threshold for the pre-selected amount of time. Triggering a transition between the guidance state machine drogue relative control state and the guidance state machine tanker relative control state further may include determining that communications for receiving the navigation data has timed out, determining that communications for receiving the vision data has timed out, determining that a vision track reset has occurred, determining that a filter has coasted for longer than a pre-selected threshold, and/or determining that a probe associated with the receiving aircraft and the drogue associated with the tanker have engaged. Triggering a transition to the guidance state machine tanker relative control state may include receiving an indication of a rendezvous between the receiving aircraft and the tanker. Triggering a transition between a filter state machine filter standby state and the filter state machine filter initialization state further may include determining that a vision search reset as occurred. Triggering a transition between the filter state machine filter initialization state and the filter state machine filter standby state further may include determining that communications for receiving the navigation data has timed out, determining that communications for receiving the vision data has timed out, determining that a filter has coasted for longer than a pre-selected threshold, and/or determining that a supervisor filter disengage has issued. Triggering a transition between the filter state machine filter initialization state and the filter state machine filter nominal state further may include determining that a drogue state estimate converged below a pre-selected threshold for a pre-selected amount of time. Triggering a transition between the filter state machine filter nominal state and the filter state machine filter initialization state further may include determining that a vision search reset has occurred. Triggering a transition between the filter state machine filter nominal state and filter state machine filter standby state further may include determining that communications for receiving the navigation data has timed out, determining that communications for receiving the vision data has timed out; determining that a filter has coasted for longer than a pre-selected threshold, and/or determining that a supervisor filter disengage has issued. Implementations of the described techniques may include hardware, a method or process, or computer software on a computer-accessible medium.

Some examples include a system for managing transition logic, without user intervention, associated with aerial fueling between an aircraft receiving fuel and a tanker delivering fuel. The system includes a vision state machine including an idle state, a searching state, and a tracking state, where the searching state includes searching, using vision data collected by the receiving aircraft, for a drogue associated with the tanker, where the tracking state includes determining a track of the drogue based on the vision data. The system includes a filter state machine including a filter standby state, a filter initialization state, and a filter nominal state, where triggering a transition between the filter initialization state and the filter nominal state, and a transition between the filter nominal state and the filter initialization state, is based on a lack of a vision reset, where the filter nominal state includes processing the vision data and determining when the vision data are stable. The system also includes a guidance state machine including a tanker relative control state and a drogue relative control state, where the tanker relative control state includes navigating the receiving aircraft based on vision data and navigation data associated with the tanker, and where the drogue relative control state includes navigating the receiving aircraft based on vision data and navigation data associated with the drogue. The system also includes where triggering a transition between the searching state and the machine tracking state, a transition between the tanker relative control state and the drogue relative control state, a transition between the tracking state and the searching state, a transition between the drogue relative control state and the tanker relative control state, are based on the filter nominal state. The system also includes where triggering a transition between the idle state and the searching state is based on the filter initialization state. Other examples include corresponding computer systems, apparatus, and computer programs recorded on one or more computer storage devices, each configured to perform the actions of the methods.

It is to be understood that both the foregoing general description and the following detailed description are exemplary and explanatory only and are not restrictive of the present teachings, as claimed.

### BRIEF DESCRIPTION OF THE DRAWINGS

The accompanying drawings, which are incorporated in and constitute a part of this specification, illustrate examples of the present teachings and together with the description, serve to explain the principles of the present teachings.
FIG. 1 is a pictorial diagram of an aerial fueling configuration;
FIG. 2A is a schematic block diagram of components of an aerial fueling guidance system;
FIG. 2B is a schematic block diagram of control components of an aerial fueling guidance system;
FIG. 3 illustrates flowcharts of state machines;
FIG. 4 is a state diagram of drogue relative navigation filtering logic;
FIG. 5 is a state diagram of navigation guidance mode logic;
FIG. 6 is a flow diagram of actions taking place when the system is in various operational states;
FIG. 7 is a flow diagram of actions taking place when the system is in reset and disable states;
FIG. 8 is a flowchart of a method for aerial fueling; and
FIG. 9 is a schematic block diagram of components of a system.

It should be noted that some details of the figures have been simplified and are drawn to facilitate understanding rather than to maintain strict structural accuracy, detail, and scale.

### DESCRIPTION

Reference will now be made in detail to the present teachings, examples of which are illustrated in the accompanying drawings. In the drawings, like reference numerals have been used throughout to designate identical elements. In the following description, reference is made to the accompanying drawings that form a part thereof, and in which is shown by way of illustration specific examples of practicing the present teachings. The following description is, therefore, merely exemplary.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

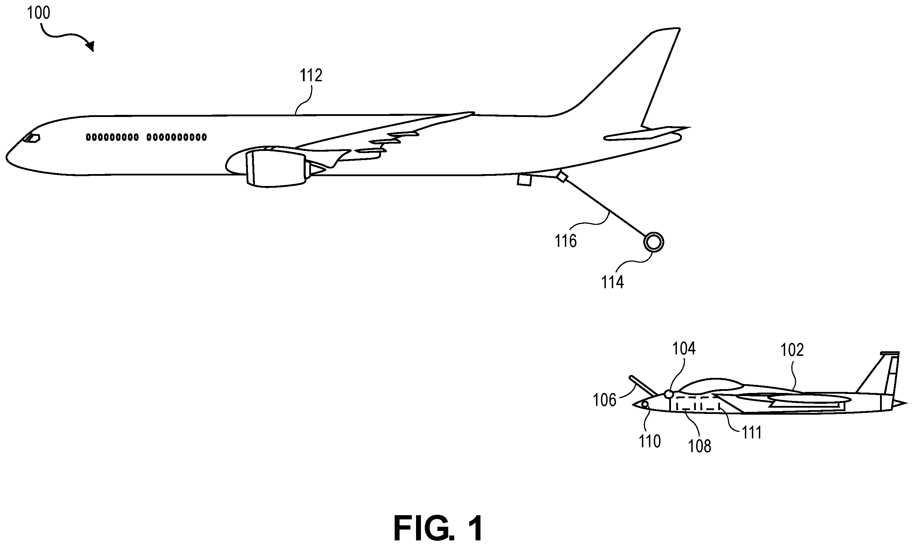

Referring now to FIG. 1, shown is a probe and drogue aerial fueling configuration 100 that includes the tanker 112 that is to fuel the receiving aircraft 102. The tanker 112 includes a hose 116 and drogue 114 that are used to deliver fuel to the probe 106 of the receiving aircraft 102. The receiving aircraft 102 includes visual sensors 110/104 that provide data for performing vision-based navigation. The receiving aircraft also includes a vision processor 108 and a guidance processor 111. The vision processor 108 searches for the drogue 114 and communicates with the navigation processor 111 when the fueling mission begins and the drogue 114 is estimated to be within a pre-selected range of the probe 106. A track of the drogue is determined and updated by systems executing on the receiving aircraft 112, the track data are filtered, and a time history of received measurements is used to predict where the drogue should travel. A guidance navigation control system begins executing when the receiving aircraft 112 begins its approach. When the guidance navigation control system is being initialized, navigation is based on the tanker, and can be either vision or GPS-based, for example. After initialization is complete, the position of the drogue as it moves (its track) is used for navigation. If the filtered track data converge, the track is stable, and the track data can be used for navigation. If the track data are unstable, the measurements could be noisy, and/or the sensors data could have high uncertainty. If the track data are stable, stateless, or frame-to-frame tracking, can be used. A stateless search results in buffering position data in the area of where the drogue was found to create a time history prior to when the drogue was found.

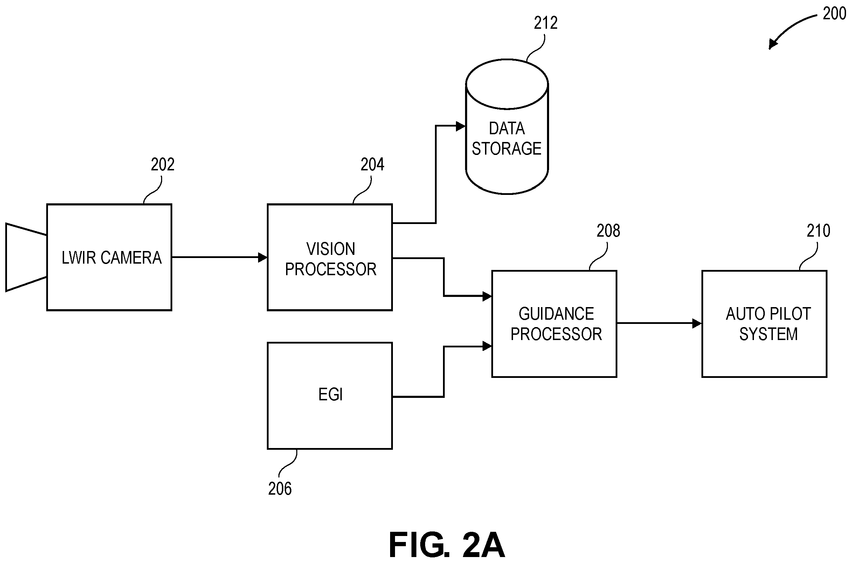

Referring now to FIG. 2A, shown is a schematic block diagram of components of an exemplary system 200 in accordance with examples of the present disclosure. To locate the drogue, in some configurations, the receiving aircraft includes one or more sensors such as, for example, but not limited to, longwave infrared cameras 202. Data from the one or more sensors are received by a vision processor 204. The data can be stored in a storage area 212, locally or remotely. Navigation data such as embedded GPS and inertial navigation data (EGI) 206, along with the sensor data from the vision processor 204 are provided to a guidance processor 208 that prepares a navigation track for the receiving aircraft. The navigation track is provided to, for example, an autopilot system 210 that navigates the receiving aircraft to receive fuel from the tanker.

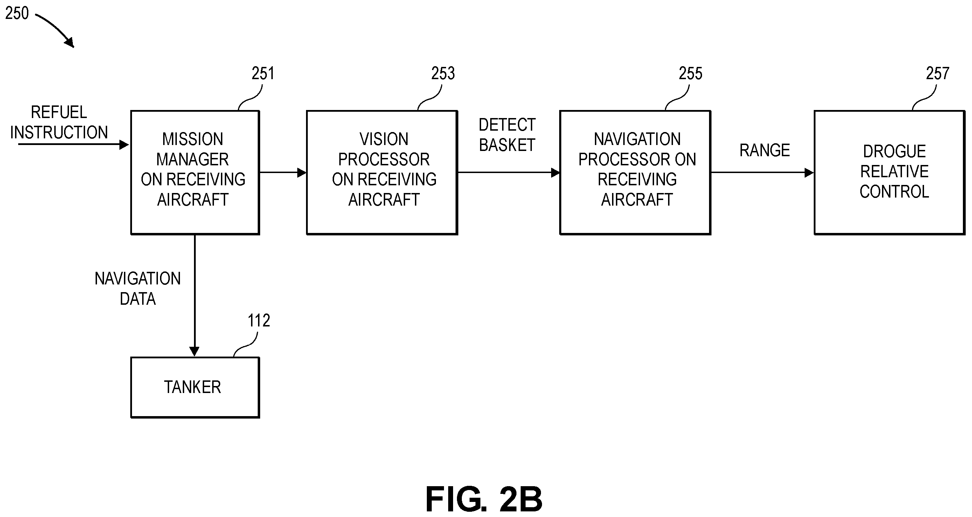

Referring now to FIG. 2B, shown is a flow diagram of a process 250 for fueling without user intervention. A mission manager 251 on the receiving aircraft receives a fuel instruction, activates the vision processor 253 on the receiving aircraft, and provides navigation data to the tanker 112. When the vision processor 253 detects the drogue, data from the vision processor 253 and the navigation processor 255 on the receiving aircraft are jointly used determine a distance between the receiving aircraft and the tanker. When the estimated displacement to the drogue is within a pre-selected range, drogue relative control 257 takes over to engage the drogue on the tanker with the probe on the receiving aircraft.

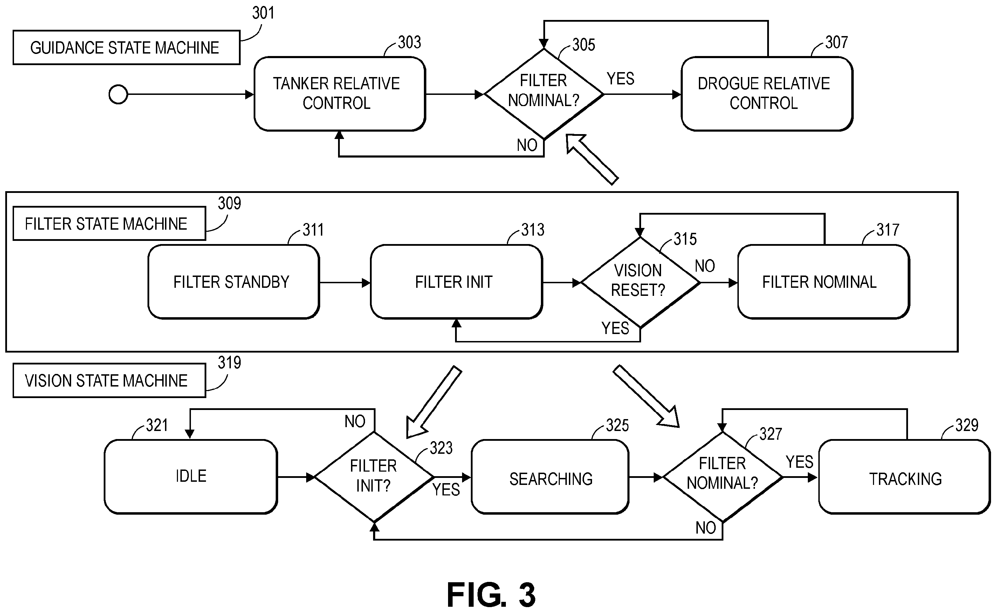

Referring now to FIG. 3, shown is a diagram that illustrates the interactions between the state machines present on the receiving aircraft in an exemplary system in accordance with examples of the present disclosure. The filter state machine 309 is in standby state 311 until a trigger to move to an initialization state 313. The vision state machine 319 remains in idle state 321 while the filter is initializing 323. After the filter is initialized, and before there is no vision reset 315, the vision system transitions to the searching state 325. When there is no vision reset, the filter state machine transitions to filter nominal state 317 where it remains until there is a vision reset. If 305 the filter state machine 309 is in filter nominal state 317, the guidance state machine 301, which had been in tanker relative control state 303, moves to drogue relative control state 307. Also, if 305 the filter state machine 309 is in filter nominal state 317, the vision state machine is in tracking state 329. When the filter state machine 309 transitions to filter initialize state 313 because of a vision reset 315, the vision state machine 319 transitions to the searching state 325 until filter nominal state 327, and the guidance state machine 301 transitions to tanker relative control 303.

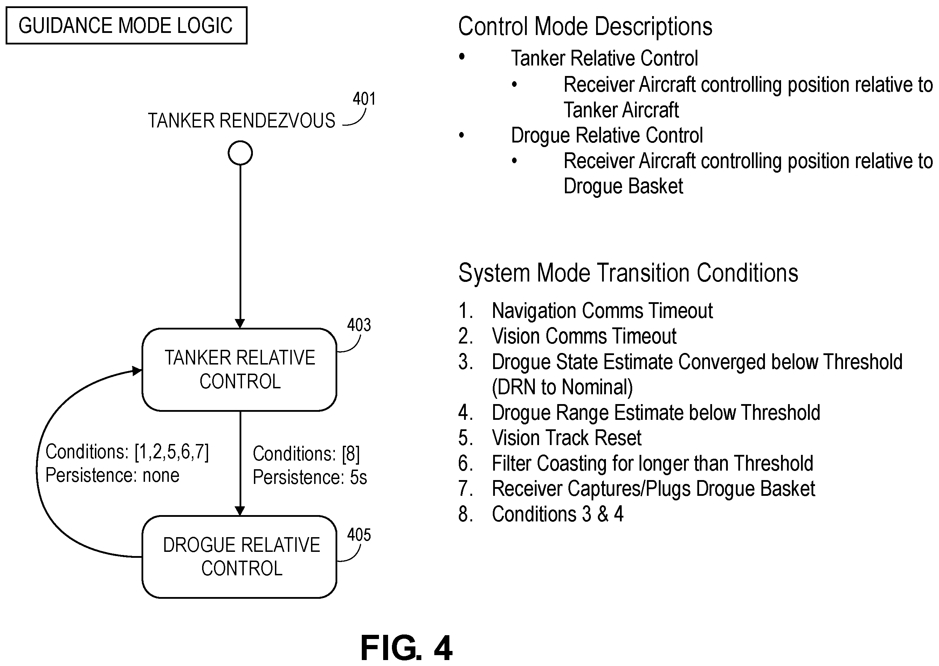

Referring now to FIG. 4, the guidance state machine can execute exemplary guidance mode logic relative to the states that the guidance mode state machine can be found in. Exemplary guidance model states can include, but are not limited to including, tanker relative control state 403. The guidance state machine transitions to tanker relative control state when a tanker rendezvous 401 is anticipated. When the guidance state machine is in tanker relative control state, the receiving aircraft controls its position relative to the tanker aircraft. Certain situations cause warnings and user alerts to be raised, and trigger a change to drogue relative control state 405. When the guidance state machine is in drogue relative control state, the receiving aircraft controls its position relative to the drogue. To transition from tanker relative control 403 to drogue relative control 405, the drogue state estimate converges below a pre-selected threshold, for example, 2, and the drogue range estimate is below another pre-selected threshold, for example, twenty feet (six metres), and these conditions persist for a pre-selected amount of time, such as, for example, but not limited to, five seconds. To transition from the drogue relative control state 405 to the tanker relative control state 403, there could be a navigation communications timeout, for example, one second, and/or a vision communications timeout, for example, one second, and/or a vision track reset, and/or the filter coasting (i.e. the filter does not receive valid inputs from the visioning system, the filter covariance increases while coasting) for more than a pre-selected threshold (i.e. when a pre-selected number of frames are lost, and the drogue is lost sight of), for example, five seconds, and/or the receiving aircraft captures/plugs the drogue, and any or all of these conditions persists for at last five seconds.

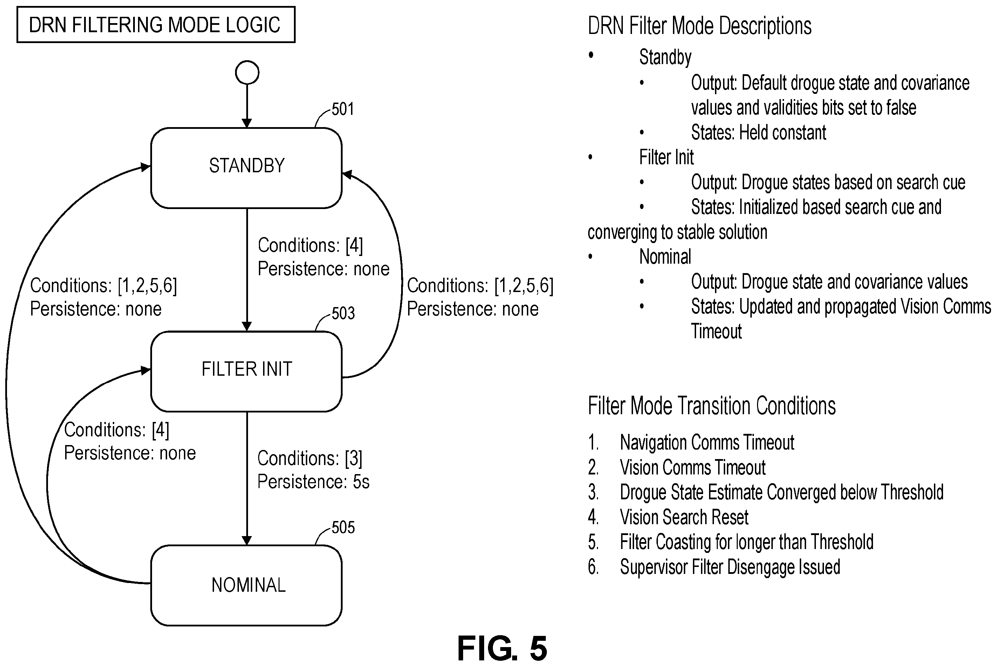

Referring now to FIG. 5, the filter state machine can execute exemplary drogue relative navigation filtering mode logic relative to the states that the filter state machine can be found in. Exemplary filter states can include, but are not limited to including, standby 501, filter initialization 503, and nominal 505. In standby state 501, the output to the filter initialization state 503 are the default drogue state and covariance values. In filter initialization state 503, the output to the nominal state 505 and the standby state 501 are drogue states based on search cues, and the states are initialized based on the search cues and converging to a stable solution in which the drogue state estimate converges below a threshold. In nominal state 505, the output to the filter initialization state 503 and the standby state 501 are drogue state and covariance values, and the states are updated and propagated. The transition from the standby state 501 to the filter initialization state 503 is triggered by a vision search reset. The transition from the filter initialization state 503 to the standby state 501 is triggered by a navigation communications timeout, and/or a vision communications timeout, and/or the filter coasting for longer than a pre-selected threshold, and/or a supervisor filter disengage issued. The transition from the filter initialization state 503 to the nominal state 505 is triggered by a drogue state estimate converging below a pre-selected threshold and persisting for a pre-selected amount of time such as, for example, but not limited to, five seconds. The transition from the nominal state 505 to the filter initialization state 503 is triggered by a vision search reset. The transition from the nominal state 505 to the standby state 501 is triggered by a navigation communications timeout, and/or a vision communications timeout, and/or the filter coasting for longer than a pre-selected threshold, and/or a supervisor filter disengage issued.

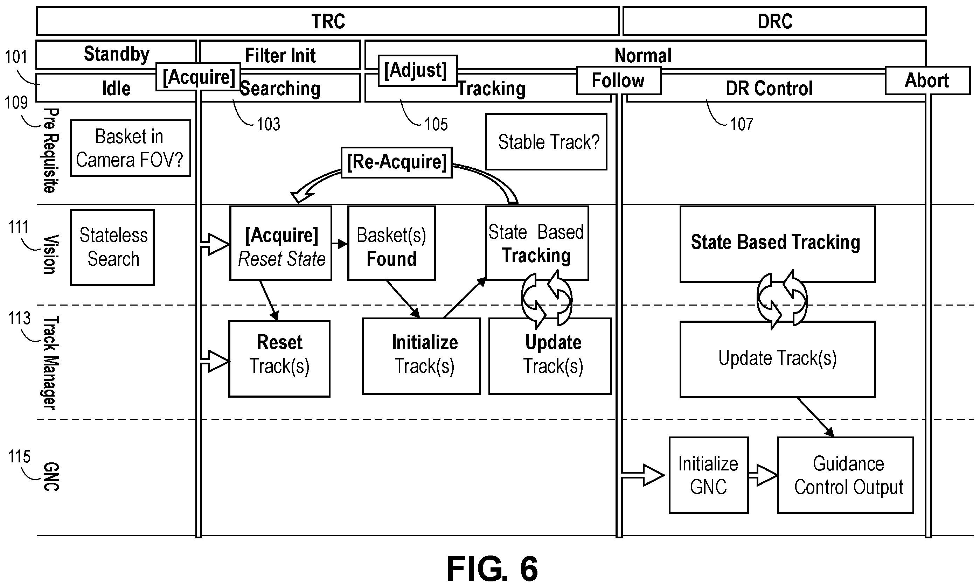

Referring now to FIG. 6, with respect to filtering and monitoring a vision-based drogue track, a vision processor can take states such as, for example, but not limited to, idle 101, searching 103, tracking 105, and drogue-relative (DR) control 107 that are mapped to the features of the system such as, for example, but not limited to, pre-requisite determination 109, image acquisition 111, drogue track management 113, and guidance/navigation/control 115. When the system is in the idle state 101 and the pre-requisite is met that the drogue is in the image system's field of view, a stateless search for the basket is conducted by the image acquisition system 111. When an image is acquired from the image acquisition system 111, the state is updated to the searching state 103, and the track manager 113 resets filters. The filters are reset to clear previous state data. For example, states from a previous engagement could still reside in the filter's history, which could cause undesirable behavior in subsequent engagement attempts. When the drogue is found in the image data, a track is initialized by the track manager 113 and a transition to the tracking state 105 is triggered. State-based tracking is initiated by the image acquisition system 111, and the track is regularly updated by the track manager 113 while the relative locations of the fueling aircraft and the aircraft to be fueled are being adjusted. If the track is lost, the state reverts from the tracking state 105 to the searching state 103, and the track is re-acquired. When the drogue is at a pre-selected position with respect to the aircraft to be fueled, the state is updated to the DR control state 107, guidance/navigation/control logic 115 is initialized, and a transition to DR control state is triggered. When the drogue is within an appropriate relative position (both laterally and longitudinally), the track state manager initiates the approach. State-based tracking and track updating and guidance/navigation/control logic inform guidance control output, and thus enables the fueling to take place. The drogue relative control state includes navigation from a hold point until the actual plug of the drogue by the probe.

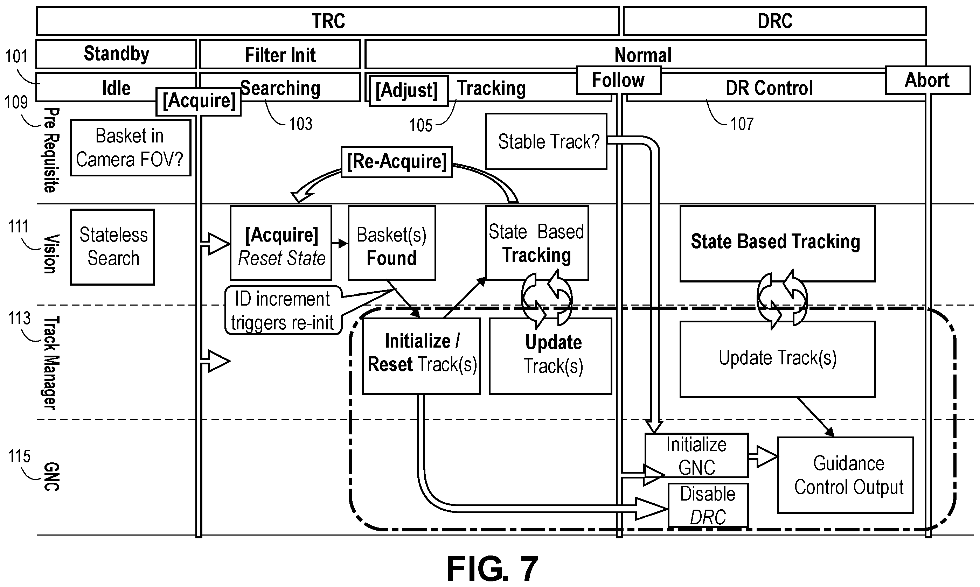

Referring now to FIG. 7, a process for scrubbing and restarting a fueling operation in accordance with examples of the present disclosure is shown. The mission manager is operational, but an unplug can happen. In this process, as in the process described with respect to FIG. 1, when the system is in the idle state 101 and the pre-requisite is met that the drogue is in the image system's field of view, a stateless search for the position of the drogue is conducted by the image acquisition system 111. A state transition from idle state 101 to searching state 103 is triggered when an image is acquired from a single frame from the image acquisition system 111. A state transition from searching state 103 to tracking state 105 is triggered when the drogue track is stable. If the track is stable, the guidance/navigation/control logic is initialized and used to inform guidance control output. The track(s) is initialized/reset by the track manager 113 and DR control is disabled. When the filter is initialized, prior state data are cleared. Control of the receiving aircraft is not based on drogue position during state transitions. A track re-initialization is triggered if the track identification is incremented. Track re-initialization by incrementing a track identification is one method for re-initializing a track. Other options include sending a separate command message. One goal of selecting one option over another is to prevent state mismatch between the vision and navigation processors. State-based tracking is initiated by the image acquisition system 111, and the track is regularly updated by the track manager 113 while the relative locations of the fueling aircraft and the aircraft to be fueled are being adjusted. A state transition from the tracking state 105 to the searching state 103 is triggered if the track is lost, and the track is re-acquired. A state transition from the tracking state 105 to the DR control state 107 is triggered when the drogue is at a pre-selected position with respect to the aircraft to be fueled, and guidance/navigation/control logic 115 is initialized. State-based tracking and track updating and guidance/navigation/control logic inform guidance control output, and thus enable the fueling to take place.

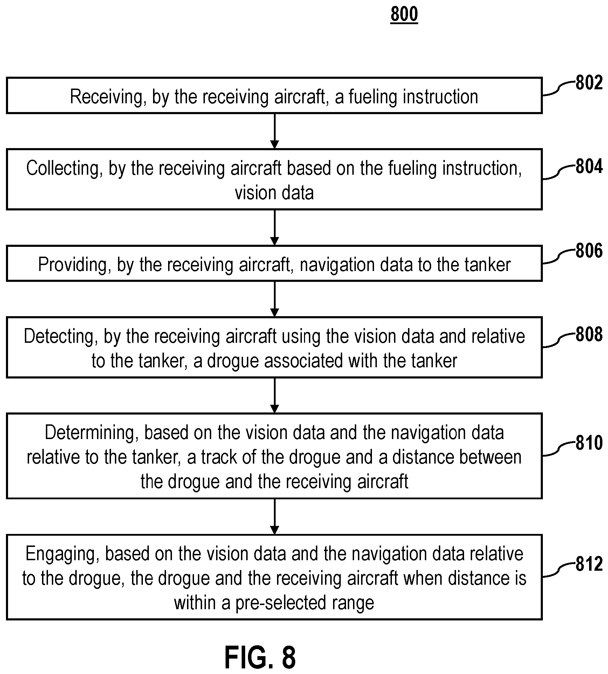

Referring now to FIG. 8, a method 800 for managing an aerial fueling between an aircraft receiving fuel and a tanker delivering fuel can include, but is not limited to including, receiving 802, by the receiving aircraft, a fueling instruction, collecting 804, without user intervention, by the receiving aircraft based on the fueling instruction, vision data, providing 806, without user intervention, by the receiving aircraft, navigation data to the tanker, and detecting 808, without user intervention, by the receiving aircraft using the vision data and relative to the tanker, a drogue associated with the tanker. The method also includes determining 810, without user intervention, based on the vision data and the navigation data relative to the tanker, a track of the drogue and a distance between the drogue and the receiving aircraft, and engaging 812, without user intervention, based on the vision data and the navigation data relative to the drogue, the drogue and the receiving aircraft when distance is within a pre-selected range.

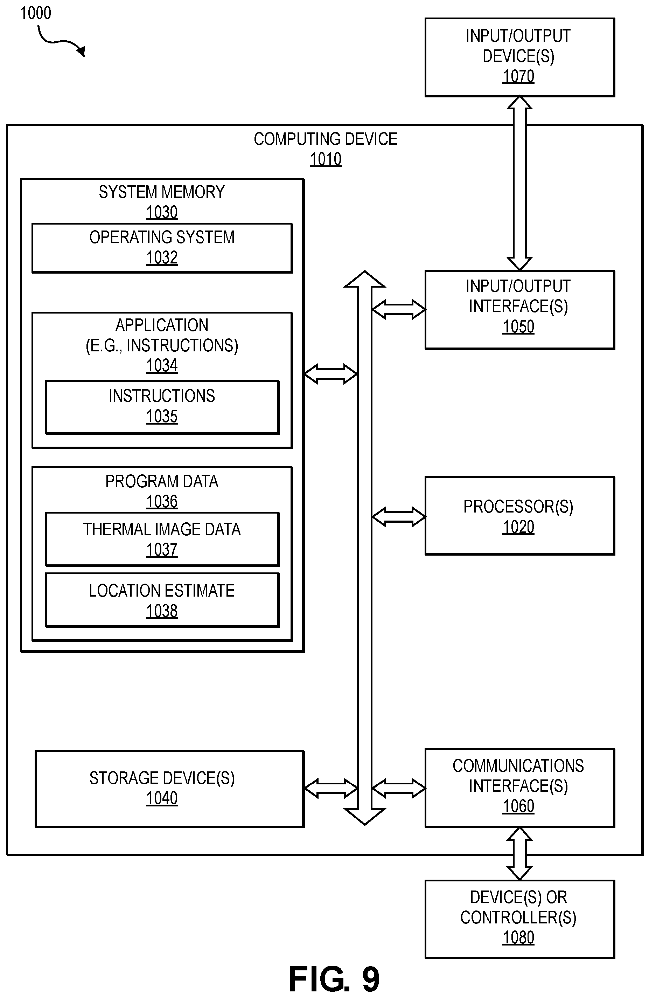

Referring now to FIG. 9, system 1000 for managing an aerial fueling between an aircraft receiving fuel and a tanker delivering fuel can include, but is not limited to including, a computing device 1010 that includes components such as, for example, but not limited to, system memory 1030, one or more storage devices 1040, input/output interfaces 1050, processors 1020, and communications interfaces 1060. The components communicate with each other over, for example, but not limited to, a communications bus. The system memory 1030 includes an operating system 1032, applications 1034, and program data 1036. The applications 1034 include instructions 1035 that execute to enable operations of the applications 1034 to be performed. The program data 1036 includes, for example, but not limited to, image data 1037 and location estimates 1038, in addition to other numerous types of data. The communications interfaces 1060 enable information exchange between the computing device 1010 and devices or controllers 1080, and the input/output interfaces 1050 enable information exchange between the computing device 1010 and input/output devices 1070.

Further examples are set out in the following clauses.

Clause 1. A method for managing transition logic associated with aerial fueling between an aircraft receiving fuel and a tanker delivering the fuel, the method comprising:
triggering a transition between a vision state machine idle state and a vision state machine searching state based on a filter state machine filter initialization state, wherein the vision state machine searching state includes searching, using vision data collected by the receiving aircraft, for a drogue associated with the tanker;
triggering a transition between the filter state machine filter initialization state and a filter state machine filter nominal state, and a transition between the filter state machine filter nominal state and the filter state machine filter initialization state, based on a lack of a vision reset, wherein the filter state machine filter nominal state includes processing the vision data and determining when the vision data are stable; and
triggering a transition between the vision state machine searching state and the vision state machine tracking state, a transition between a guidance state machine tanker relative control state and a guidance state machine drogue relative control state, a transition between the vision state machine tracking state and the vision state machine searching state, a transition between the guidance state machine drogue relative control state and the guidance state machine tanker relative control state, based on the filter state machine filter nominal state,
wherein the vision state machine tracking state includes determining a track of the drogue based on the vision data,
wherein the guidance state machine tanker relative control state includes navigating the receiving aircraft based on vision data and navigation data associated with the tanker, and
wherein the guidance state machine drogue relative control state includes navigating the receiving aircraft based on vision data and navigation data associated with the drogue.

Clause 2. The method of clause 1, wherein triggering a transition between the guidance state machine tanker relative control state and the guidance state machine drogue relative control state further comprises:
determining that a drogue state estimate convergence is below a first pre-selected threshold for a first pre-selected amount of time; or
determining that a drogue range estimate is below a second pre-selected threshold for a second pre-selected amount of time.

Clause 3. The method of clause 1 or 2, wherein triggering a transition between the guidance state machine drogue relative control state and the guidance state machine tanker relative control state further comprises:
determining that communications for receiving the navigation data has timed out;
determining that communications for receiving the vision data has timed out;
determining that a vision track reset has occurred;
determining that a filter has coasted for longer than a pre-selected threshold; or
determining that a probe associated with the receiving aircraft and the drogue associated with the tanker have engaged.

Clause 4. The method of any of clauses 1 to 3, wherein triggering a transition to the guidance state machine tanker relative control state comprises: receiving an indication of a rendezvous between the receiving aircraft and the tanker.

Clause 5. The method of any of clauses 1 to 4wherein triggering a transition between a filter state machine filter standby state and the filter state machine filter initialization state further comprises: determining that a vision search reset as occurred.

Clause 6. The method of clause 5, wherein triggering a transition between the filter state machine filter initialization state and the filter state machine filter standby state further comprises:
determining that communications for receiving the navigation data has timed out;
determining that communications for receiving the vision data has timed out;
determining that a filter has coasted for longer than a pre-selected threshold; or
determining that a supervisor filter disengage has issued.

Clause 7. The method of any of clauses 1 to 6, wherein triggering a transition between the filter state machine filter initialization state and the filter state machine filter nominal state further comprises: determining that a drogue state estimate converged below a pre-selected threshold for a pre-selected amount of time.

Clause 8. The method of any of clauses 1 to 7, wherein triggering a transition between the filter state machine filter nominal state and the filter state machine filter initialization state further comprises: determining that a vision search reset has occurred.

Clause 9. The method of any of clauses 1 to 8, wherein triggering a transition between the filter state machine filter nominal state and filter state machine filter standby state further comprises:
determining that communications for receiving the navigation data has timed out;
determining that communications for receiving the vision data has timed out;
determining that a filter has coasted for longer than a pre-selected threshold; or
determining that a supervisor filter disengage has issued.

Clause 10. A system for managing transition logic associated with aerial fueling between an aircraft receiving fuel and a tanker delivering fuel, the system comprising:
a vision state machine including an idle state, a searching state, and a tracking state, wherein the searching state includes searching, using vision data collected by the receiving aircraft, for a drogue associated with the tanker, wherein the tracking state includes determining a track of the drogue based on the vision data;
a filter state machine including a filter standby state, a filter initialization state, and a filter nominal state, wherein triggering a transition between the filter initialization state and the filter nominal state, and a transition between the filter nominal state and the filter initialization state, is based on a lack of a vision reset, wherein the filter nominal state includes processing the vision data and determining when the vision data are stable; and
a guidance state machine including a tanker relative control state and a drogue relative control state, wherein the tanker relative control state includes navigating the receiving aircraft based on vision data and navigation data associated with the tanker, and wherein the drogue relative control state includes navigating the receiving aircraft based on vision data and navigation data associated with the drogue,
wherein triggering a transition between the searching state and the machine tracking state, a transition between the tanker relative control state and the drogue relative control state, a transition between the tracking state and the searching state, a transition between the drogue relative control state and the tanker relative control state, are based on the filter nominal state, and
wherein triggering a transition between the idle state and the searching state is based on the filter initialization state.

Clause 11. The system of clause 10, wherein triggering a transition between the tanker relative control state and the drogue relative control state further comprises:
determining that a drogue state estimate convergence is below a first pre-selected threshold for a pre-selected amount of time; or
determining that a drogue range estimate is below a second pre-selected threshold for the pre-selected amount of time While the present teachings have been illustrated with respect to one or more examples, alterations and/or modifications can be made to the illustrated examples without departing from the scope of the appended claims. In addition, while a particular feature of the present teachings may have been disclosed with respect to only one of several examples, such feature may be combined with one or more other features of the other examples as may be desired and advantageous for any given or particular function. As used herein, the terms "a", "an", and "the" may refer to one or more elements or parts of elements. As used herein, the terms "first" and "second" may refer to two different elements or parts of elements. As used herein, the term "at least one of A and B" with respect to a listing of items such as, for example, A and B, means A alone, B alone, or A and B. Those skilled in the art will recognize that these and other variations are possible. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the intended purpose described herein. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

## Claims

1. A method for managing an aerial fueling between an aircraft receiving fuel and a tanker delivering fuel, the method comprising:
receiving, by the receiving aircraft, a fueling instruction;
collecting, by the receiving aircraft based on the fueling instruction, vision data;
providing, by the receiving aircraft, navigation data to the tanker;
detecting, by the receiving aircraft using the vision data and relative to the tanker, a drogue associated with the tanker;
determining, based on the vision data and the navigation data relative to the tanker, a track of the drogue and a distance between the drogue and the receiving aircraft; and
engaging, based on the vision data and the navigation data relative to the drogue, the drogue and the receiving aircraft when distance is within a pre-selected range.

2. The method of claim 1, further comprising:
establishing a drogue track that is stable;
confirming a quality of the navigation data and the vision data; and
moving between aerial fueling mission states.

3. The method of claim 2, wherein the aerial fueling mission states comprise:
a vision state machine searching state for searching, using vision data collected by the receiving aircraft, for the drogue associated with the tanker.

4. The method of claim 3, wherein the aerial fueling mission states comprise:
a filter state machine filter nominal state for processing the vision data and determining when the vision data are stable.

5. The method of claim 4, wherein the aerial fueling mission states comprise:
a vision state machine tracking state for determining the track of the drogue based on the vision data determined to be stable.

6. The method of any preceding claim, wherein the aerial fueling mission states comprise:
a guidance state machine tanker relative control state for navigating the receiving aircraft based on the tanker.

7. The method of claim 6, wherein the aerial fueling mission states comprise:
a guidance state machine drogue relative control state for navigating the receiving aircraft based on the drogue; and, optionally,
wherein triggering a transition between the guidance state machine tanker relative control state and the guidance state machine drogue relative control state further comprises:
determining that a drogue state estimate convergence is below a first pre-selected threshold for a pre-selected amount of time; or
determining that a drogue range estimate is below a second pre-selected threshold for the pre-selected amount of time.

8. The method of claim 7, wherein triggering a transition between the guidance state machine drogue relative control state and the guidance state machine tanker relative control state further comprises:
determining that communications for receiving the navigation data has timed out;
determining that communications for receiving the vision data has timed out;
determining that a vision track reset has occurred;
determining that a filter has coasted for longer than a pre-selected threshold; or
determining that a probe associated with the receiving aircraft and the drogue associated with the tanker have engaged.

9. A system comprising an aircraft receiving fuel and a tanker delivering fuel, wherein:
the receiving aircraft is configured:
to receive a fueling instruction;
based on the fueling instruction, to collect vision data;
to provide navigation data to the tanker;
using the vision data and relative to the tanker, to detect a drogue associated with the tanker; and
the system is configured:
to determine, based on the vision data and the navigation data relative to the tanker, a track of the drogue and a distance between the drogue and the receiving aircraft; and
to engage, based on the vision data and the navigation data relative to the drogue, the drogue and the receiving aircraft when distance is within a pre-selected range.

10. The system of claim 9, wherein the system is further configured:
to establish a drogue track that is stable;
to confirm a quality of the navigation data and the vision data; and
to move between aerial fueling mission states.

11. The system of claim 10, wherein the aerial fueling mission states comprise:
a vision state machine searching state for searching, using vision data collected by the receiving aircraft, for the drogue associated with the tanker.

12. The system of claim 11, wherein the aerial fueling mission states comprise:
a filter state machine filter nominal state for processing the vision data and determining when the vision data are stable; and, optionally,
a vision state machine tracking state for determining the track of the drogue based on the vision data determined to be stable.

13. The system of any preceding claim, wherein the aerial fueling mission states comprise:
a guidance state machine tanker relative control state for navigating the receiving aircraft based on the tanker.

14. The system of claim 13, wherein the aerial fueling mission states comprise:
a guidance state machine drogue relative control state for navigating the receiving aircraft based on the drogue; and, optionally,
wherein the system is configured to trigger a transition between the guidance state machine tanker relative control state and the guidance state machine drogue relative control state by:
determining that a drogue state estimate convergence is below a first pre-selected threshold for a pre-selected amount of time; or
determining that a drogue range estimate is below a second pre-selected threshold for the pre-selected amount of time.

15. The system of claim 14, wherein the system is configured to trigger a transition between the guidance state machine drogue relative control state and the guidance state machine tanker relative control state by:
determining that communications for receiving the navigation data has timed out;
determining that communications for receiving the vision data has timed out;
determining that a vision track reset has occurred;
determining that a filter has coasted for longer than a pre-selected threshold; or
determining that a probe associated with the receiving aircraft and the drogue associated with the tanker have engaged.
